# EUROPEAN PATENT SPECIFICATION

(11) **EP 2 153 255 B1**
(45) Date of publication and mention of the grant of the patent: **24.06.2015**
(21) Application number: 08755023.2
(22) Date of filing: 02.05.2008
(51) Int. Cl.: G02B 5/20, E06B 9/24

(54) **LIGHT REDIRECTING SOLAR CONTROL FILM**
LICHTUMLENKENDER SOLARSTEUERFILM
FILM DE FILTRAGE SOLAIRE À RÉORIENTATION DE LUMIÈRE

(30) Priority: 23.05.2007 US 752350
(43) Date of publication of application: 17.02.2010
(73) Proprietor: 3M Innovative Properties Company, Saint Paul, MN 55133-3427 (US)
(72) Inventor: PADIYATH, Raghunath, Saint Paul, Minnesota 55133-3427 (US); HUNTLEY, Douglas A., Saint Paul, Minnesota 55133-3427 (US); BENSON, Olester Jr., Saint Paul, Minnesota 55133-3427 (US)
(74) Representative: Vossius & Partner Patentanwälte Rechtsanwälte mbB
(86) International application number: PCT/US2008/062464
(87) International publication number: WO 2008/147632

(56) References cited:
- EP-A1- 1 102 093
- DE-A1- 2 615 379
- US-A- 5 729 387
- US-A- 6 111 696
- US-A1- 2005 254 130
- US-B1- 6 531 230
- US-B2- 6 929 864

## Description

The present disclosure relates generally to light redirecting solar control films and particularly to light redirecting solar control laminates and light redirecting solar control glazing units.

The need for energy efficient windows and glazing systems is known. The choice of a particular type of window depends of a number of factors including UV, visible and optical performance, aesthetics and climatic conditions. In cooling dominated climates, a glazing unit having low solar heat gain coefficient and low insulating properties may be adequate while in heating dominated climates a moderate solar heat gain along with high insulating properties are needed.

Low emissivity (Low-e) coatings reflect mid to far infrared energy and are used in insulated glazing units. Low-e windows are especially useful in heating dominated climates. Two types of Low-e coatings exist. Pyrolytic Low-e coatings, commonly referred to as "hard coats" are applied during the manufacture of glass while sputtered Low-e coatings are applied in a vacuum process, commonly referred to as "soft coats", after the glass plate is manufactured. The hard Low-e coatings are more durable and may be stored indefinitely prior to window manufacture. The soft coats typically comprise silver or silver alloys and are easily attacked by the atmospheric elements such as moisture, salt and water. Furthermore, during the construction of the window, a practice known as "edge deletion" is performed to reduce the coating edge from such attacks.

Commonly known methods (absorbing films and/or window shades) for reducing solar heat gain and glare also reduce visible light transmission by as much as 80%. As a result, under overcast sky, artificial lighting must be used which results in increased energy usage.

US-A-2005/0254130 describes a device for guiding light consisting of at least one partially translucent surface material, with a surface upper side, which has optically active surface structures for guiding and/or scattering light, as well as an optically switchable coating provided at least in partial areas of the surface structures, or at least two directly or indirectly opposing surface upper sides, of which one exhibits optically active surface structures for guiding and/or scattering light, and the other provides an optically switchable coating that covers at least parts of the surface upper side.

US-B-6531230 discloses multilayer polymeric films and other optical bodies which are useful in making coloured mirrors and polarizers, the films are characterized by a highly uniform change in colour as a function of viewing angle.

DE-A-2615379 describes a screening for a light opening, such as a window, having a plurality of transparent prismatic elements.

The present invention is directed to light redirecting solar control films and light redirecting solar control glazing units and is defined by the features of the claims.

The present disclosure is directed to a light redirecting layer disposed on a light visible light transmitting and infrared light reflecting multilayer film. The solar control films described herein provide improved illumination of a building interior while minimizing unwanted solar gain through the window.

In a first embodiment, a light redirecting solar control film includes a multilayer polymeric film that transmits visible light and reflects infrared light, and a light redirecting layer adjacent to the multilayer film forming a light redirecting solar control film. The light redirecting layer includes a major surface forming a plurality of prism structures.

In another embodiment, a light redirecting solar control glazing unit includes a first glazing substrate, and a light redirecting solar control film disposed on the first glazing substrate. The light redirecting solar control film includes a multilayer polymeric film that transmits visible light and reflects infrared light, and a light redirecting layer adjacent to the multilayer film forming a light redirecting solar control film. The light redirecting layer has a major surface forming a plurality of prism structures.

A light redirecting solar control system includes a glazing substrate, a light redirecting solar control film disposed on the glazing substrate, and a diffuser positioned to receive light transmitted by the light redirecting solar control film. The light redirecting solar control film includes a multilayer polymeric film that transmits visible light and reflects infrared light, and a light redirecting layer adjacent to the multilayer film forming a light redirecting solar control film. The light redirecting layer has a major surface forming a plurality of prism structures.

The invention may be more completely understood in consideration of the following detailed description of various embodiments of the invention in connection with the accompanying drawings, in which:
**FIG. 1** is a schematic cross-sectional view of an illustrative solar control laminate;
**FIG. 2** is a schematic cross-sectional view of an illustrative solar control glazing unit; and
**FIG. 3** is a schematic diagram of an interior space with an illustrative light redirecting system.

The figures are not necessarily to scale. Like numbers used in the figures refer to like components. However, it will be understood that the use of a number to refer to a component in a given figure is not intended to limit the component in another figure labeled with the same number.

In the following description, reference is made to the accompanying drawings that form a part hereof, and in which are shown by way of illustration several specific embodiments. It is to be understood that other embodiments are contemplated and may be made without departing from the scope of the present invention. The following detailed description, therefore, is not to be taken in a limiting sense.

All scientific and technical terms used herein have meanings commonly used in the art unless otherwise specified. The definitions provided herein are to facilitate understanding of certain terms used frequently herein and are not meant to limit the scope of the present disclosure.

Unless otherwise indicated, all numbers expressing feature sizes, amounts, and physical properties used in the specification and claims are to be understood as being modified in all instances by the term "about."

The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

The term "polymer" will be understood to include polymers, copolymers (e.g., polymers formed using two or more different monomers), oligomers and combinations thereof, as well as polymers, oligomers, or copolymers that can be formed in a miscible blend.

The term "adjacent" refers to the relative position of two elements that are close to each other and may or may not be in contact with each other or have one or more layers separating the two elements.

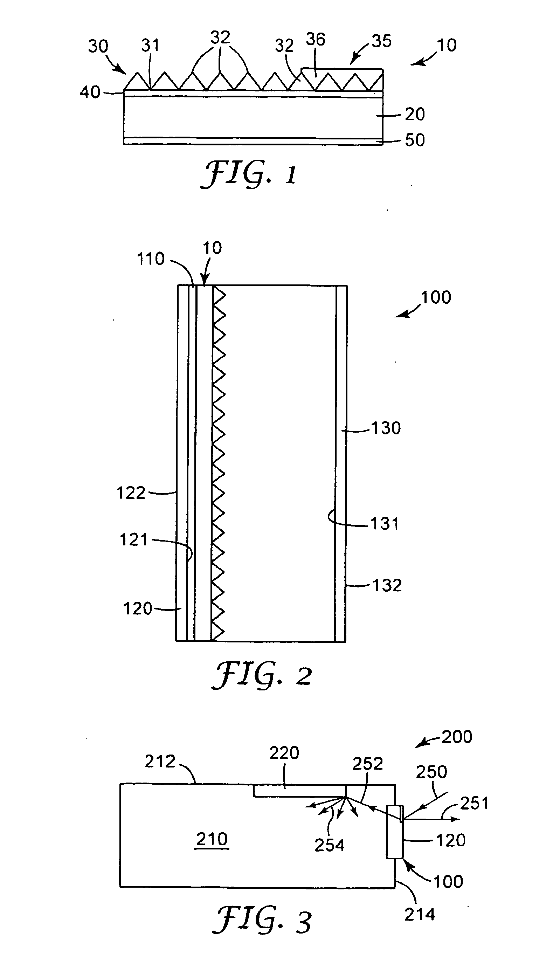

The present disclosure relates to light redirecting solar control films and particularly to light redirecting solar control laminates, light redirecting solar control glazing units and light redirecting solar control systems. The present disclosure is directed to a light redirecting layer disposed on a light visible light transmitting and infrared light reflecting multilayer polymeric film. The solar control films described herein provide improved illumination of a building interior while minimizing unwanted solar gain through the window. While the present invention is not so limited, an appreciation of various aspects of the invention will be gained through a discussion of the examples provided below. **FIG. 1** is a schematic cross-sectional view of an illustrative solar control laminate **10.** The solar control laminate **10** includes a multilayer polymeric film **20** and a light redirecting layer **30.** In many embodiments, the multilayer film **20** and a light redirecting layer **30** are joined together with an adhesive layer **40** or adhesion promoting layer (e.g., corona treatment layer, or priming layer). In other embodiments, the light redirecting layer **30** is integrally formed with the multilayer film **20** via extrusion or embossing. In some embodiments, an infrared light absorbing layer **50** is disposed on the multilayer film **20.** The multilayer film **20** transmits visible light and reflects infrared light. In particular, the multilayer film **20** transmits at least 50% of all visible light wavelengths and reflects at least 50% of infrared light from 850 nm to 1100 nm, preferably at least 50% of all wavelengths of infrared light. Preferably, the multilayer film **20** transmits at least 60% of all visible light wavelengths and reflects at least 60% of infrared light from 850 nm to 1100 nm, preferably at least 60% of all wavelengths of infrared light. More preferably, the multilayer film **20** transmits at least 75% of all visible light wavelengths and reflects at least 75% of infrared light from 850 nm to 1100 nm. Most preferably, the multilayer film **20** transmits at least 90% of all visible light wavelengths and reflects at least 90% of infrared light from 850 nm to 1100 nm. The multilayer polymeric film **20** can be formed of any useful materials.

In some embodiments, the multilayer polymeric film **20** includes a plurality of alternating polymeric layers of a first polymer material and a second polymer material and at least one of the alternating layers is birefringent and orientated and the alternating polymeric layers cooperate to reflect infrared light and visible light is transmitted through the multilayer polymeric infrared light reflecting film. The layers have different refractive index characteristics so that some infrared light is reflected at interfaces between adjacent layers. The layers are sufficiently thin so that light reflected at a plurality of the interfaces undergoes constructive or destructive interference in order to give the film the desired reflective and transmissive properties. For optical films designed to reflect light at near-infrared or infrared wavelengths, each layer generally has an optical thickness (i.e., a physical thickness multiplied by refractive index) of less than about 1 micrometer. Thicker layers can, however, also be included, such as skin layers at the outer surfaces of the film, or protective boundary layers disposed within the film that separate packets of layers.

The reflective and transmissive properties of the multilayer polymeric infrared light reflecting film are a function of the refractive indices of the respective layers (i.e., microlayers). Each layer can be characterized at least in localized positions in the film by in-plane refractive indices nₓ, n_{y}, and a refractive index n_{z} associated with a thickness axis of the film. These indices represent the refractive index of the subject material for light polarized along mutually orthogonal x-, y-, and z-axes, respectively. In practice, the refractive indices are controlled by judicious materials selection and processing conditions. The multilayer polymeric infrared light reflecting film can be made by coextrusion of typically tens or hundreds of layers of two alternating polymers A, B, followed by optionally passing the multilayer extrudate through one or more multiplication dies, and then stretching or otherwise orienting the extrudate to form a final film. The resulting film is composed of typically tens or hundreds of individual layers whose thicknesses and refractive indices are tailored to provide one or more reflection bands in desired region(s) of the spectrum, such as in the visible, near infrared, and/or infrared. In order to achieve high reflectivities with a reasonable number of layers, adjacent layers preferably exhibit a difference in refractive index for light polarized along the x-axis of at least 0.05. In some embodiments, if the high reflectivity is desired for two orthogonal polarizations, then the adjacent layers also exhibit a difference in refractive index for light polarized along the y-axis of at least 0.05. In other embodiments, the refractive index difference can be less than 0.05 or 0 to produce a multilayer stack that reflects normally incident light of one polarization state and transmits normally incident light of an orthogonal polarization state.

If desired, the refractive index difference between adjacent layers for light polarized along the z-axis can also be tailored to achieve desirable reflectivity properties for the p-polarization component of obliquely incident light. For ease of explanation, at any point of interest on a multilayer optical film the x-axis will be considered to be oriented within the plane of the film such that the magnitude of Δnₓ is a maximum. Hence, the magnitude of Δn_{y} can be equal to or less than (but not greater than) the magnitude of Δnₓ. Furthermore, the selection of which material layer to begin with in calculating the differences Δnₓ, Δn_{y}, Δn_{z} is dictated by requiring that Δnₓ be non-negative. In other words, the refractive index differences between two layers forming an interface are Δnj = n₁ⱼ - n₂ⱼ, where j = x, y, or z and where the layer designations 1, 2 are chosen so that n₁ₓ≥ n₂ₓ., i.e., Δnx ≥ 0.

To maintain high reflectivity of p-polarized light at oblique angles of incidence, the z-index mismatch Δn_{z} between layers can be controlled to be substantially less than the maximum in-plane refractive index difference Δnₓ, such that Δn_{z} ≤ 0.5*Δnₓ. More preferably, Δn_{z} ≤ 0.25*Δnₓ. A zero or near zero magnitude z-index mismatch yields interfaces between layers whose reflectivity for p-polarized light is constant or near constant as a function of incidence angle. Furthermore, the z-index mismatch Δn_{z} can be controlled to have the opposite polarity compared to the in-plane index difference Δnₓ, i.e. Δn_{z} < 0. This condition yields interfaces whose reflectivity for p-polarized light increases with increasing angles of incidence, as is the case for s-polarized light.

Multilayer optical films have been described in, for example, US Patent 3,610,724 (Rogers); US Patent 3,711,176 (Alfrey, Jr. et al.), "Highly Reflective Thermoplastic Optical Bodies For Infrared, Visible or Ultraviolet Light"; US Patent 4,446,305 (Rogers et al.); US Patent 4,540,623 (Im et al.); US Patent 5,448,404 (Schrenk et al.); US Patent 5,882,774 (Jonza et al.) "Optical Film"; US Patent 6,045,894 (Jonza et al.) "Clear to Colored Security Film"; US Patent 6,531,230 (Weber et al.) "Color Shifting Film"; PCT Publication WO 99/39224 (Ouderkirk et al.) "Infrared Interference Filter"; and US Patent Publications 2001/0022982 A1 (Neavin et al.), "Apparatus For Making Multilayer Optical Films"; 2006/0154049 A1 (Padiyath et al.), "Solar Control Multilayer Film". In such polymeric multilayer optical films, polymer materials are used predominantly or exclusively in the makeup of the individual layers. Such films can be compatible with high volume manufacturing processes, and may be made in large sheets and roll goods.

The multilayer polymeric infrared light reflecting film can be formed by any useful combination of alternating polymer type layers. In many embodiments, at least one of the alternating polymer layers is birefringent and oriented. In some embodiments, one of the alternating polymer layers is birefringent and orientated and the other alternating polymer layer is isotropic. In one embodiment, the multilayer optical film is formed by alternating layers of a first polymer type including polyethylene terephthalate (PET) or copolymer of polyethylene terephthalate (coPET) and a second polymer type including poly(methyl methacrylate) (PMMA) or a copolymer of poly(methyl methacrylate) (coPMMA). In another embodiment, the multilayer polymeric infrared light reflecting film is formed by alternating layers of a first polymer type including polyethylene terephthalate and a second polymer type including a copolymer of poly(methyl methacrylate and ethyl acrylate). In another embodiment, the multilayer polymeric infrared light reflecting film is formed by alternating layers of a first polymer type including a glycolated polyethylene terephthalate (PETG - a copolymer ethylene terephthalate and a second glycol moiety such as, for example, cyclohexanedimethanol) or a copolymer of a glycolated polyethylene terephthalate (coPETG) and second polymer type including polyethylene naphthalate (PEN) or a copolymer of polyethylene naphthalate (coPEN). In another embodiment, the multilayer polymeric infrared light reflecting film is formed by alternating layers of a first polymer type including polyethylene naphthalate or a copolymer of polyethylene naphthalate and a second polymer type including poly(methyl methacrylate) or a copolymer of poly(methyl methacrylate). Useful combination of alternating polymer type layers are disclosed in US 6,352,761.

The light redirecting layer **30** includes a major surface **31** forming a plurality of prism structures **32.** In some embodiments, a filling layer **35** is disposed within cavities formed between adjacent prism structures **32.** In these embodiments, the filling layer **35** has a refractive index value that is different than a refractive index value of the prism structures **32.** This difference can be a value of 0.05 or greater or 0.1 or greater. The filling layer **35** can be formed of any useful visible light transmitting material such as, for example, a polymer material.

In some embodiments, the filling layer **35** is capable of being cleanly removed from the plurality of prism structures **32.** For example, the solar control film **10** including the filling layer **35** can be applied onto a glazing substrate and then the filling layer **35** can be removed to expose the prism structures **32.** Thus, the filling layer **35** protects the prism structures **32** until the solar control film **10** is applied and then can be removed, if desired. The term "cleanly" removed refers to leaving substantially no filling layer **35** residue on the prism structures **32** and also leaving substantially no prism structure **32** residue on the filling layer **35.** In some embodiments, the filling layer **35** is used as a structure template to aid in forming the prism structures **32.**

The prism structures **32** and/or filling layer **35** can be formed of any useful polymerizable composition. In many embodiments, the prism structures **32** and/or filling layer **35** are formed from different polymerizable compositions. In some embodiments, the polymerizable composition is formed of monomers including mono-, di-, or higher functional monomers, and/or oligomers, and in some embodiments, those having a high index of refraction, for example, greater than about 1.4 or greater than about 1.5. The monomers and/or oligomers may be polymerizable using UV radiation. Suitable materials include (meth)acrylates, halogenated derivatives, telechelic derivatives, and the like, for example, those described in U.S. Pat. Nos. 4,568,445; 4,721,377; 4,812,032; 5,424,339; and 6,355,754. In some embodiments, the polymerizable compositions include polyesters such as polyethylene terephthalate, polyethylene naphthalate, copolyesters or polyester blends based on naphthalene dicarboxylic acids; polycarbonates; polystyrenes; styrene-acrylonitriles; cellulose acetates; polyether sulfones; poly(methyl)acrylates such as polymethylmethacrylate; polyurethanes; polyvinyl chloride; polycyclo-olefins; polyimides; glass; or combinations or blends thereof. The polymerizable compositions may also include a naphthalate-containing multilayered optical film as described in U.S. Pat. No. 6,111,696.

In some embodiments, the prism structures **32** polymerizable composition is described in U.S. Patent Publication No., 2005/0147838. This polymerizable composition includes a first monomer comprising a major portion of 2-propenoic acid, (1-methylethylidene)bis9(2,6-dibromo-4,1-phenylene)oxy(2-hydroxy-3,1-prop- anediyl)) ester; pentaerythritol tri(meth)acrylate; and phenoxyethyl (meth)acrylate.

In many embodiments, the prism structures **32** are linear prism structures, or pyramidal prism structures. In some embodiments, the prism structures **32** are linear prism structures are non-linear or broken linear prism structures **32.** The prism structures **32** redirect at least a portion of the visible light transmitted through the multilayer film **20.** In many embodiments, at least 50% of visible light transmitted through the multilayer film **20** is redirected by the light redirecting layer **30.** In many embodiments, the plurality of prism structures **32** cooperates to direct at least a portion of incident light in substantially the same direction or directions. This light redirecting effect is due to refraction at the prism surface interface.

The illustrated prism structures **32** are regular sharp tip prism structures **32,** however it is understood that the prism structures **32** can have any useful configuration such as, for example, shape tip, rounded tip, and/or truncated tip, as desired. The prism structures **32** can have a varying height, spatially varying pitch, or spatially varying facet angle, as desired. In some embodiments, the prism structures **32** have a pitch and height in a range from 50 to 2000 micrometers, or from 50 to 1000 micrometers.

In some embodiments, an infrared light absorbing layer **50** is disposed on the multilayer film **20.** In these embodiments, the infrared light absorbing layer **50** includes a metal oxide dispersed within a cured polymeric binder. In some embodiments, this infrared light absorbing layer **50** has a thickness in a range from 1 to 20 micrometers, or from 1 to 10 micrometers, or from 1 to 5 micrometers. This infrared light absorbing layer **50** can include a plurality of metal oxide nanoparticles. A partial listing of metal oxide nanoparticles includes tin, antimony, indium and zinc oxides and doped oxides. In some embodiments, the metal oxide nanoparticles include, tin oxide, antimony oxide, indium oxide, indium doped tin oxide, antimony doped indium tin oxide, antinomy tin oxide, antimony doped tin oxide or mixtures thereof. In some embodiments, the metal oxide nanoparticles include tin oxide or doped tin oxide and optionally further includes antimony oxide and/or indium oxide. The polymeric binder layer includes infrared radiation absorbing nanoparticles dispersed through the polymeric binder layer. The infrared radiation absorbing nanoparticles may include any material that preferentially absorbs infrared radiation. Examples of suitable materials include metal oxides such as tin, antimony, indium and zinc oxides and doped oxides. In some instances, the metal oxide nanoparticles include, tin oxide, antimony oxide, indium oxide, indium doped tin oxide, antimony doped indium tin oxide, antinomy tin oxide, antimony doped tin oxide or mixtures thereof. In some embodiments, the metal oxide nanoparticles include antimony oxide (ATO) and/or indium tin oxide (ITO). In some cases, the infrared radiation absorbing nanoparticles may include or be made of lanthanum hexaboride, or LaB6.

Lanthanum hexaboride is an effective near IR (NIR) absorber, with an absorption band centered on 900 nm. The infrared radiation absorbing nanoparticles can be sized such that they do not materially impact the visible light transmission of the polymeric binder layer. In some instances, the infrared radiation absorbing nanoparticles may have any useful size such as, for example, 1 to 100, or 30 to 100, or 30 to 75 nanometers.

The nanoparticles can have any useful size such as, for example, 1 to 100, or 30 to 100, or 30 to 75 nanometers. In some embodiments, the metal oxide nanoparticles include antimony tin oxide or doped antimony tin oxide dispersed in a polymeric material. The polymeric material can be any useful binder material such as, for example, polyolefin, polyacrylate, polyester, polycarbonate, fluoropolymer, and the like.

In some embodiments, the infrared light absorbing layer 50 binder is a cured polymeric material that can function as a hardcoat. Suitable polymeric binders to form the infrared light absorbing nanoparticle layer include the thermal and/or U.V.-polymerized (i.e., cured) products of acrylate and/or methacrylate monomers. A suitable cured binder is the thermal and/or U.V.-polymerized product of a brominated, alkyl-substituted phenyl acrylate or methacrylate (e.g., 4,6-dibromo-2-sec-butyl phenyl acrylate), a methyl styrene monomer, a brominated epoxy diacrylate, 2-phenoxyethyl acrylate, and a hexa-functional aromatic urethane acrylate oligomer, as described in U.S. Pat. No. 6,355,754, incorporated herein by reference. While most types of energy polymerizable telechelic monomers and oligomers are useful for forming these polymeric binders, acrylates are preferred because of their high reactivity. The curable binder composition should be of flowable viscosity that is low enough that air bubbles do not become entrapped in the composition. Reactive diluents can be mono- or di-functional monomers such as, for example, SR-339, SR-256, SR-379, SR-395, SR-440, SR-506, CD-611, SR-212, SR-230, SR-238, and SR-247 available from Sartomer Co., Exton, Pa. Typical useful oligomers and oligomeric blends include CN-120, CN-104, CN-115, CN-116, CN-117, CN-118, CN-119, CN-970A60, CN-972, CN-973A80, CN-975 available from Sartomer Co., Exton, Pa. and Ebecryl 1608, 3200, 3201, 3302, 3605, 3700, 3701, 608, RDX-51027, 220, 9220, 4827, 4849, 6602, 6700-20T available from Surface Specialties, Smyrna, Ga. Additionally, a multi-functional crosslinker can assist in providing a durable, high crosslink density composite matrix. Examples of multi-functional monomers include SR-295, SR-444, SR-351, SR-399, SR-355, and SR-368 available from Sartomer Co., Exton, Pa. and PETA-K, PETIA and TMPTA-N available from Surface Specialties, Smyrna, Ga. Multi-functional monomers can be used as crosslinking agents to increase the glass transition temperature of the binder polymer that results from the polymerizing of the polymerizable composition.

The infrared light absorbing layer **50** binder can form a hard resin or hardcoat. The term "hard resin" or "hardcoat" means that the resulting cured polymer exhibits an elongation at break of less than 50 or 40 or 30 or 20 or 10 or 5 percent when evaluated according to the ASTM D-882-91 procedure. In some embodiments, the hard resin polymer can exhibit a tensile modulus of greater than 100 kpsi (6.89.times.10.sup.8 pascals) when evaluated according to the ASTM D-882-91 procedure. In some embodiments, the hard resin polymer can exhibit a haze value of less than 10% or less than 5% when tested in a Taber abrader according to ASTM D 1044-99 under a load of 500 g and 50 cycles (haze can be measured with Haze-Gard Plus, BYK-Gardner, Md., haze meter.

In some infrared light absorbing layer **50** embodiments, the metal oxide nanoparticles include indium tin oxide or doped indium tin oxide dispersed in a polymeric material. The nanoparticle layer can have any useful thickness such as, for example, from 1 to 10 or 2 to 8 micrometers. The nanoparticle layer can include nanoparticles at any useful loading or wt % such as, for example, 30 to 90 wt %, 40 to 80 wt %, or 50 to 80 wt %. In many embodiments, the nanoparticle layer is nonconducting. Nanoparticle compositions are commercially available from, for example, Advanced Nano Products Co., LTD., South Korea, under the tradenames TRB-PASTE.TM. SM6080(B), SH7080, SL6060. In another embodiment, the metal oxide nanoparticles include zinc oxide and/or aluminum oxide, such oxides are available from GfE Metalle und Materialien GmbH, Germany.

The solar control film **10** can include an adhesive layer such as, for example, a pressure sensitive adhesive layer (with an optional release liner), on either exposed surface of the solar control film. The pressure sensitive adhesive (PSA) layer **110 (****FIG. 2****)** can any type of adhesive that enables the solar control multilayer film to be affixed to a glazing substrate such as glass. In order to attach the solar control film to the glass, one surface of the solar control film is coated with the pressure-sensitive adhesive (PSA) and a release sheet is removed from the PSA before application of the film to the glass.

Ultra-violet absorption additives can be incorporated into the PSA. The UV absorber may include a benzotriazole, benzatriazine, benizophenone, or a combination thereof; or it may, be any of those described in U.S. 2004/0241469 A1; U.S. 2004/10242735 A1; and U.S. Pat. No. 6,613,819 B2; all incorporated herein by reference to the extent they do not conflict with the present disclosure. Some examples include CGL 139, CGL 777, and Tinuvin™ 327, 460, 479, 480, 777, 900, and 928; all from Ciba Specialty Chemicals.

In many embodiments, the PSA is an optically clear PSA film such as a polyacrylate pressure sensitive adhesive. The Pressure-Sensitive Tape Council has defined pressure sensitive adhesives as material with the following properties: (1) aggressive and permanent tack, (2) adherence with no more than finger pressure, (3) sufficient ability to hold onto an adherand, (4) sufficient cohesive strength, and (5) requires no activation by an energy source. PSAs are normally tacky at assembly temperatures, which is typically room temperature or greater. Materials that have been found to function well as PSAs are polymers designed and formulated to exhibit the requisite viscoelastic properties resulting in a desired balance of tack, peel adhesion, and shear holding power at the assembly temperature. The most commonly used polymers for preparing PSAs are natural rubber-, synthetic rubber- (e.g., styrene/butadiene copolymers (SBR) and styrene/isoprene/styrene (SIS) block copolymers), silicone elastomer-, poly alpha-olefin-, and various (meth) acrylate- (e.g., acrylate and methacrylate) based polymers. Of these, (meth)acrylate-based polymer PSAs have evolved as a preferred class of PSA for the present invention due to their optical clarity, permanence of properties over time (aging stability), and versatility of adhesion levels, to name just a few of their benefits.

The release liner described above can be formed of any useful material such as, for example, polymers or paper and may include a release coat. Suitable materials for use in release coats include, but are not limited to, fluoropolymers, acrylics and silicones designed to facilitate the release of the release liner from the adhesive.

The solar control film **10** can include one or more additional functional layers. Additional layers can include, for example, a polarizer layer to reduce glare or a diffusion layer to scatter light.

**FIG. 2** is a schematic cross-sectional view of an illustrative solar control glazing unit **100.** The illustrated glazing unit **100** includes a first glazing substrate **120** and a second glazing substrate **130,** however it is contemplated that a single glazing substrate may be utilized. The first glazing substrate **120** includes an inner surface **121** and an outer surface **122.** The second glazing substrate **130** includes an inner surface **131** and an outer surface **132.** The solar control film **10,** described above, is fixed to the first glazing substrate **120** inner surface **121** via an adhesive layer **110,** as described above. The illustrated solar control glazing unit **100** is an insulated glazing unit where the solar control **10** is fixed between the glass substrates **120, 130** and the glass substrates **120, 130** form a sealed volume of gas **140** between the glass substrates **120, 130.**

In one embodiment, the glazing substrate **120, 130** is disposed between the multilayer polymeric film **20** and a light redirecting layer **30,** forming the solar control laminate. The multilayer film **20** and a light redirecting layer **30** can be adhered to the glazing substrate **120, 130** via any adhesive or adhesion promoting layer described above.

In many embodiments, the solar control film **10** is disposed on only a portion of the glazing unit. For example, solar control film **10** is disposed on only a portion of the surface area of the glass substrate. In some embodiments, the solar control film **10** is disposed on less than 75 % of the surface area of the glass substrate, or less than 50 % of the surface area of the glass substrate.

The first glazing substrate **120** and the second glazing substrate **130** may be formed of any suitable glazing material. In some instances, the glazing substrates may be selected from a material that possesses desirable optical properties at particular wavelengths including visible light. In some cases, the glazing substrates may be selected from materials that transmit substantial amounts of light within the visible spectrum. In some instances, the first glazing substrate and/or the second glazing substrate may each be selected from materials such as glass, quartz, sapphire, and the like. In particular instances, the first glazing substrate and the second glazing substrate are both glass.

**FIG. 3** is a schematic diagram of an interior space **210** with an illustrative light redirecting system **200.** The system **200** includes a glass substrate **120,** a light redirecting solar control film **10** disposed on the glass substrate **120,** and a diffuser **220** positioned to receive light transmitted by the light redirecting solar control film **10.** The glass substrate **120** can be a component of an insulated glazing unit **100,** as described above. The interior space **210** can include an exterior wall **214** and a ceiling **212.** The insulated glazing unit **100** is illustrated disposed within the exterior wall and the diffuser **220** is disposed on the ceiling. Thus, the illustrated system **200** has the glass substrate **120** (and light redirecting solar control film 10) and the diffuser **220** substantially positioned orthogonally to each other.

Incident solar light **250** strikes the light redirecting solar control film **10** and reflects a substantial portion of infrared light shown as light ray **251.** Visible light transmitted through the light redirecting solar control film **10** is redirected by the light redirecting layer into the interior space **210** at an angle from the direction of the incident solar light **250.** A portion of this redirected light **252** is incident on the diffuser **220** and the diffuser **220** reflects this redirected light **252** in many directions **254.** Thus, this system redirects visible light into an interior space **210** without providing the infrared light (e.g., heat) into the interior space **210.**

Thus, embodiments of the LIGHT REDIRECTING SOLAR CONTROL FILM are disclosed. One skilled in the art will appreciate that embodiments other than those disclosed are envisioned. The disclosed embodiments are presented for purposes of illustration and not limitation, and the present invention is limited only by the claims that follow.

## Claims

1. A light redirecting solar control film (10) comprising:
a multilayer polymeric film (20) that transmits at least 50% of all visible light wavelengths and reflects at least 50% of all infrared light from 850 nm to 1100 nm; and
a light redirecting layer (30) adjacent to the multilayer film (20) forming a light redirecting solar control film, the light redirecting layer (30) comprising a major surface (31) forming a plurality of prism structures (32), wherein the light redirecting layer (30) is adhesively bonded to or integrally formed with the multilayer film (20) by extrusion or embossing

2. A light redirecting solar control film according to claim 1, wherein the light redirecting layer (30) comprising a major surface (31) forming a plurality of linear prism structures (32).

3. A light redirecting solar control film according to claim 1, wherein the light redirecting layer (30) comprising a major surface (31) forming a plurality of pyramidal prism structures (32).

4. A light redirecting solar control film according to claim 1, further comprising a filling layer (35) disposed on the prism structures (32) filling at least a portion of cavities formed between adjacent prism structures (32), wherein the filling layer (35) has a refractive index value that is different than a refractive index value of the prism structures (32).

5. A light redirecting solar control film according to claim 1, wherein the light redirecting layer (30) comprising a major surface (31) forming a plurality of truncated prism structures (32).

6. A light redirecting solar control film according to claim 1, wherein the multilayer film (20) comprises a multilayer polymeric infrared light reflecting film comprising a plurality of alternating polymeric layers of a first polymer material and a second polymer material and at least one of the alternating layers is birefringent and orientated and the alternating polymeric layers cooperate to reflect infrared light and visible light is transmitted through the multilayer polymeric infrared light reflecting film.

7. A light redirecting solar control film according to claim 1, further comprising an infrared light absorbing nanoparticle layer (50) disposed adjacent to the multilayer polymeric film, wherein the infrared absorbing nanoparticle layer (50) comprises lanthanum hexaboride, antimony tin oxide, or indium tin oxide.

8. A light redirecting solar control glazing unit (100), comprising:
a first glazing substrate (120); and
a light redirecting solar control film (10) disposed on the first glazing substrate (120), the light redirecting solar control film (10) comprising:
a multilayer polymeric film (20) that transmits at least 50% of all visible light wavelengths and reflects at least 50% of all infrared light from 850 nm to 1100 nm; and
a light redirecting layer (30) adjacent to the multilayer film (20) forming a light redirecting solar control film, the light redirecting layer (30) comprising a major surface (31) forming a plurality of prism structures (32), wherein the light redirecting layer (30) is adhesively bonded to or integrally formed with the multilayer film (20) by extrusion and embossing

9. A light redirecting solar control glazing unit according to claim 8, further comprising a second glazing substrate (130) and the light redirecting solar control film (10) is disposed between the first glazing substrate (120) and the second glazing substrate (130).

10. A light redirecting solar control glazing unit according to claim 8, further comprising a diffuser (220) positioned to receive light transmitted by the light redirecting solar control film (10).

## Patentansprüche

1. Lichtumlenkende Sonnenschutzfolie (10), umfassend:
eine Mehrschicht-Polymerfolie (20), die mindestens 50 % aller sichtbaren Lichtwellenlängen durchlässt und mindestens 50 % des gesamten Infrarotlichts von 850 nm bis 1100 nm reflektiert; und
eine an die Mehrschichtfolie (20) angrenzende lichtumlenkende Schicht (30), die eine lichtumlenkende Sonnenschutzfolie bildet, wobei die lichtumlenkende Schicht (30) eine Hauptoberfläche (31) umfasst, die eine Vielzahl von Prismenstrukturen (32) ausbildet, wobei die lichtumlenkende Schicht (30) mittels Klebstoff an die Mehrschichtfolie (20) gebunden oder
durch Extrusion oder Prägung integral damit geformt ist.

2. Lichtumlenkende Sonnenschutzfolie nach Anspruch 1, wobei die lichtumlenkende Schicht (30) eine Hauptoberfläche (31) umfasst, die eine Vielzahl von linearen Prismenstrukturen (32) ausbildet.

3. Lichtumlenkende Sonnenschutzfolie nach Anspruch 1, wobei die lichtumlenkende Schicht (30) eine Hauptoberfläche (31) umfasst, die eine Vielzahl von pyramidenförmigen Prismenstrukturen (32) ausbildet.

4. Lichtumlenkende Sonnenschutzfolie nach Anspruch 1, ferner umfassend eine auf den Prismenstrukturen (32) angeordnete Füllschicht (35), die wenigstens einen Teil von zwischen benachbarten Prismenstrukturen (32) gebildeten Hohlräumen füllt, wobei die Füllschicht (35) einen Brechungsindexwert aufweist, der sich von einem Brechungsindexwert der Prismenstrukturen (32) unterscheidet.

5. Lichtumlenkende Sonnenschutzfolie nach Anspruch 1, wobei die lichtumlenkende Schicht (30) eine Hauptoberfläche (31) umfasst, die eine Vielzahl von abgeschnittenen Prismenstrukturen (32) ausbildet.

6. Lichtumlenkende Sonnenschutzfolie nach Anspruch 1, wobei die Mehrschichtfolie (20) eine Infrarotlicht reflektierende Mehrschicht-Polymerfolie umfasst, die eine Vielzahl von abwechselnden Polymerschichten eines ersten Polymermaterials und eines zweiten Polymermaterials umfasst, und mindestens eine der abwechselnden Schichten doppelbrechend und ausgerichtet ist und die abwechselnden Polymerschichten zusammenwirken, um Infrarotlicht zu reflektieren, und sichtbares Licht durch die Infrarotlicht reflektierende Mehrschicht-Polymerfolie durchgelassen wird.

7. Lichtumlenkende Sonnenschutzfolie nach Anspruch 1, ferner umfassend eine Infrarotlicht absorbierende Nanoteilchenschicht (50), die angrenzend an die Mehrschicht-Polymerfolie angeordnet ist, wobei die infrarotabsorbierende Nanoteilchenschicht (50) Lanthanhexaborid, Antimonzinnoxid oder Indiumzinnoxid umfasst.

8. Lichtumlenkende Sonnenschutz-Verglasungseinheit (100), umfassend:
ein erstes Verglasungssubstrat (120); und
eine lichtumlenkende Sonnenschutzfolie (10), die auf dem ersten Verglasungssubstrat (120) angeordnet ist, wobei die lichtumlenkende Sonnenschutzfolie (10) Folgendes umfasst:
eine Mehrschicht-Polymerfolie (20), die mindestens 50 % aller sichtbaren Lichtwellenlängen durchlässt und mindestens 50 % des gesamten Infrarotlichts von 850 nm bis 1100 nm reflektiert; und
eine an die Mehrschichtfolie (20) angrenzende lichtumlenkende Schicht (30), die eine lichtumlenkende Sonnenschutzfolie bildet,
wobei die lichtumlenkende Schicht (30) eine Hauptoberfläche (31) umfasst, die eine Vielzahl von Prismenstrukturen (32) ausbildet,
wobei die lichtumlenkende Schicht (30) mittels Klebstoff an die Mehrschichtfolie (20) gebunden oder durch Extrusion und Prägung integral damit geformt ist.

9. Lichtumlenkende Sonnenschutz-Verglasungseinheit nach Anspruch 8, ferner umfassend ein zweites Verglasungssubstrat (130), und die lichtumlenkende Sonnenschutzfolie (10) ist zwischen dem ersten Verglasungssubstrat (120) und dem zweiten Verglasungssubstrat (130) angeordnet.

10. Lichtumlenkende Sonnenschutz-Verglasungseinheit nach Anspruch 8, ferner umfassend einen Diffusor (220), der so angeordnet ist, dass er von der lichtumlenkenden Sonnenschutzfolie (10) durchgelassenes Licht empfängt.

## Revendications

1. Film de protection solaire à redirection de lumière (10) comprenant :
un film polymère multicouche (20) qui transmet au moins 50 % de toutes les longueurs d'onde de lumière visible et réfléchit au moins 50 % de toute la lumière infrarouge de 850 nm à 1 100 nm ; et
une couche de redirection de lumière (30) adjacente au film multicouche (20) formant un film de protection solaire à redirection de lumière, la couche de redirection de lumière (30) comprenant une surface principale (31) formant une pluralité de structures prismatiques (32), dans lequel la couche de redirection de lumière (30) est liée de manière adhésive à, ou formée en une seule pièce avec, le film multicouche (20) par extrusion ou gaufrage.

2. Film de protection solaire à redirection de lumière selon la revendication 1, dans lequel la couche de redirection de lumière (30) comprend une surface principale (31) formant une pluralité de structures prismatiques linéaires (32).

3. Film de protection solaire à redirection de lumière selon la revendication 1, dans lequel la couche de redirection de lumière (30) comprend une surface principale (31) formant une pluralité de structures prismatiques pyramidales (32).

4. Film de protection solaire à redirection de lumière selon la revendication 1, comprenant en outre une couche de remplissage (35) disposée sur les structures prismatiques (32) remplissant au moins une partie de cavités formées entre des structures prismatiques adjacentes (32), dans lequel la couche de remplissage (35) a une valeur d'indice de réfraction qui est différente d'une valeur d'indice de réfraction des structures prismatiques (32).

5. Film de protection solaire à redirection de lumière selon la revendication 1, dans lequel la couche de redirection de lumière (30) comprend une surface principale (31) formant une pluralité de structures prismatiques tronquées (32).

6. Film de protection solaire à redirection de lumière selon la revendication 1, dans lequel le film multicouche (20) comprend un film multicouche polymère réfléchissant la lumière infrarouge comprenant une pluralité de couches polymères alternées d'un premier matériau polymère et d'un deuxième matériau polymère et au moins l'une des couches alternées est biréfringente et orientée et les couches polymères alternées coopèrent pour réfléchir la lumière infrarouge et la lumière visible est transmise à travers le film multicouche polymère réfléchissant la lumière infrarouge.

7. Film de protection solaire à redirection de lumière selon la revendication 1, comprenant en outre une couche de nanoparticules absorbant la lumière infrarouge (50) disposée adjacente au film polymère multicouche, dans lequel la couche de nanoparticules absorbant l'infrarouge (50) comprend de l'hexaborure de lanthane, de l'oxyde d'antimoine et d'étain ou de l'oxyde d'indium et d'étain.

8. Unité de vitrage de protection solaire à redirection de lumière (100) comprenant :
un premier substrat de vitrage (120) ; et
un film de protection solaire à redirection de lumière (10) disposé sur le premier substrat de vitrage (120), le film de protection solaire à redirection de lumière (10) comprenant :
un film polymère multicouche (20) qui transmet au moins 50 % de toutes les longueurs d'onde de lumière visible et réfléchit au moins 50 % de toute la lumière infrarouge de 850 nm à 1 100 nm ; et
une couche de redirection de lumière (30) adjacente au film multicouche (20) formant un film de protection solaire à redirection de lumière, la couche de redirection de lumière (30) comprenant une surface principale (31) formant une pluralité de structures prismatiques (32), dans lequel la couche de redirection de lumière (30) est liée de manière adhésive à, ou formée en une seule pièce avec, le film multicouche (20) par extrusion et gaufrage.

9. Unité de vitrage de protection solaire à redirection de lumière selon la revendication 8, comprenant en outre un deuxième substrat de vitrage (130) et le film de protection solaire à redirection de lumière (10) est disposé entre le premier substrat de vitrage (120) et le deuxième substrat de vitrage (130).

10. Unité de vitrage de protection solaire à redirection de lumière selon la revendication 8, comprenant en outre un diffuseur (220) positionné de manière à recevoir la lumière transmise par le film de protection solaire à redirection de lumière (10).
